# EUROPEAN PATENT APPLICATION

(11) **EP 4 322 312 A1**
(43) Date of publication of application: **14.02.2024**
(21) Application number: 22799139.5
(22) Date of filing: 04.05.2022
(51) Int. Cl.: H01M 50/507, H01M 50/213, H01M 50/24

(54) **BUS BAR ASSEMBLY, BATTERY PACK INCLUDING SAME, AND AUTOMOBILE**

(30) Priority: 06.05.2021 KR 20210058819
(71) Applicant: LG Energy Solution, Ltd., Seoul 07335 (KR)
(72) Inventor: YANG, Jin-Oh, Daejeon 34122 (KR); OH, Kwang-Keun, Daejeon 34122 (KR); JUNG, In-Hyuk, Daejeon 34122 (KR); CHOI, Hae-Won, Daejeon 34122 (KR)
(74) Representative: Goddar, Heinz J.
(86) International application number: PCT/KR2022/006444
(87) International publication number: WO 2022/235096

(57) **Abstract**

A battery pack according to an embodiment of the present disclosure includes a plurality of battery cells; and a busbar assembly positioned on a side of the battery cells and configured to electrically connect the battery cells, wherein the busbar assembly includes a sub-busbar for electrical connection to positive electrodes and negative electrodes of the battery cells; and a busbar cover configured to cover the sub-busbar, and having a busbar hole to guide the electrical connection between the sub-busbar and the battery cells.

## Description

### TECHNICAL FIELD

The present disclosure relates to a busbar assembly and a battery pack and a vehicle comprising the same.

The present application claims priority to Korean Patent Application No. 10-2021-0058819 filed on May 6, 2021 in the Republic of Korea, the disclosure of which is incorporated herein by reference.

### BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that are driven by an electrical driving source. Such secondary batteries are gaining attention for their advantages of remarkably reducing the use of fossil fuels and not generating by-products from the use of energy, making it a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. A unit secondary battery cell or a unit battery cell has its operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

When fabricating the battery pack by connecting the plurality of battery cells in series and/or in parallel, it is general to make a battery module including at least one battery cell, and then fabricate a battery pack or a battery rack using at least one battery module with an addition of any other component, for example, a busbar assembly.

In general, the conventional battery pack includes a plurality of battery cells, a busbar assembly for electrical connection of the battery cells and a cell frame accommodating the plurality of battery cells and the busbar assembly. In general, the conventional cell frame includes an assembly of a plurality of plates including a front plate, a rear plate, a side plate a lower plate and an upper plate to accommodate the plurality of battery cells and ensure the strength.

However, due to the characteristics of the cell frame structure including the assembly of the plurality of plates, the conventional battery pack has the increased manufacturing cost and the complex assembly process, so there are disadvantages in terms of price competitiveness and fabrication efficiency.

Furthermore, due to the cell frame structure including the assembly of the plurality of plates, the conventional battery pack has an increase in its total size and thus low energy density.

### DISCLOSURE

### Technical Problem

Accordingly, the present disclosure is directed to providing a busbar assembly for improving the energy density and strength, and a battery pack and a vehicle comprising the same.

The present disclosure is further directed to providing a busbar assembly for improving the price competitiveness and manufacturing efficiency, and a battery pack and a vehicle comprising the same.

The present disclosure is further directed to providing a busbar assembly for improving the cooling performance, and a battery pack and a vehicle comprising the same.

### Technical Solution

To solve the above-described problem, the present disclosure provides a battery pack including a plurality of battery cells; and a busbar assembly positioned on a side of the battery cells and configured to electrically connect the battery cells, wherein the busbar assembly includes a sub-busbar for electrical connection to positive electrodes and negative electrodes of the battery cells; and a busbar cover configured to cover the sub-busbar, and having a busbar hole to guide the electrical connection between the sub-busbar and the battery cells.

Preferably, the battery pack may include a filling member filled in a space between the plurality of battery cells to cover at least part of the busbar assembly.

Preferably, the filling member may be filled in the space between the battery cells through the busbar hole on a side of the busbar assembly.

Preferably, the connection between the sub-busbar and the positive electrodes of the battery cells and the connection between the sub-busbar and the negative electrodes of the battery cells may be performed in an open space of the busbar hole.

Preferably, the sub-busbar may include a busbar bridge of a strip shape having a predetermined length and width; a positive electrode connection portion integrally extended and protruded from the busbar bridge, and connected to the positive electrodes of the battery cells; and a negative electrode connection portion integrally extended and protruded from the busbar bridge, and connected to the negative electrodes of the battery cells.

Preferably, the negative electrode connection portion may be protruded in a direction opposite to the positive electrode connection portion.

Preferably, the busbar hole may include a main hole formed in the busbar cover, the main hole having an open space with a predetermined size in the busbar cover; and an auxiliary hole extended from an end of the main hole, the auxiliary hole having an open space of a groove shape with a predetermined size.

Preferably, the positive electrode connection portion may be positioned in the main hole, and the negative electrode connection portion may be positioned in the auxiliary hole.

Preferably, a region inside a top edge having the positive electrodes of the battery cells may be positioned in the main hole.

Preferably, the open space of the main hole may be larger in size than the positive electrode connection portion.

Preferably, the open space of the auxiliary hole may be at least equal to or larger in size than the negative electrode connection portion.

Preferably, the busbar assembly may include a pair of the busbar covers, and the sub-busbar may be inserted in between the pair of busbar covers.

Preferably, the sub-busbar may be a single layer having a strip shape with a predetermined length and width.

Additionally, the present disclosure provides a busbar assembly for electrical connection of battery cells of a battery pack, the busbar assembly including a sub-busbar for electrical connection to positive electrodes and negative electrodes of the battery cells; and a busbar cover configured to cover the sub-busbar, and having a busbar hole to guide the electrical connection between the sub-busbar and the battery cells.

Furthermore, the present disclosure provides a vehicle including at least one battery pack according to the above-described embodiments.

### Advantageous Effects

According to the various embodiments as described above, it is possible to provide a busbar assembly for improving the energy density and strength, and a battery pack and a vehicle comprising the same.

Additionally, according to the various embodiments as described above, it is possible to provide a busbar assembly for improving the price competitiveness and manufacturing efficiency, and a battery pack and a vehicle comprising the same.

Furthermore, according to the various embodiments as described above, it is possible to provide a busbar assembly for improving the cooling performance, and a battery pack and a vehicle comprising the same.

### DESCRIPTION OF DRAWINGS

The accompanying drawings illustrate the exemplary embodiment of the present disclosure and together with the following detailed description, serve to provide further understanding of the technical features of the present disclosure, and thus, the present disclosure should not be construed as being limited to the drawings.
FIG. 1 is a diagram illustrating a battery pack according to an embodiment of the present disclosure.
FIG. 2 is an exploded perspective view of the battery pack of FIG. 1.
FIG. 3 is a diagram illustrating a battery cell of a battery cell assembly of the battery pack of FIG. 2.
FIG. 4 is a diagram illustrating a battery cell according to another embodiment of the battery cell assembly of FIG. 3.
FIG. 5 is a perspective view of a busbar assembly of the battery pack of FIG. 2.
FIG. 6 is a perspective view of a connection busbar of the busbar assembly of FIG. 5.
FIG. 7 is a perspective view of a cooling unit of the battery pack of FIG. 2.
FIG. 8 is a cross-sectional view of the cooling unit of FIG. 7.
FIG. 9 is a perspective view of an S-structure unit of the battery pack of FIG. 2.
FIG. 10 is a perspective view of a bottom plate of the battery pack of FIG. 2.
FIG. 11 is a diagram illustrating S-structure support ribs according to another embodiment of the bottom plate of FIG. 10.
FIG. 12 is a diagram illustrating the pack case structure formation through a filling member of the battery pack of FIG. 1.
FIG. 13 is a diagram illustrating a battery pack according to another embodiment of the present disclosure.
FIG. 14 is an exploded perspective view of the battery pack of FIG. 13.
FIG. 15 is a diagram illustrating a battery cell of the battery pack of FIG. 14.
FIG. 16 is a partial cross-sectional view showing the internal structure of the battery cell of FIG. 15.
FIG. 17 is a partial cross-sectional view showing the upper structure of the battery cell of FIG. 15.
FIG. 18 is a partial cross-sectional view showing the lower structure of the battery cell of FIG. 15.
FIG. 19 is a bottom view of the battery cell of FIG. 15.
FIG. 20 is an exploded perspective view of a connection busbar of a busbar assembly of the battery pack of FIG. 13.
FIG. 21 is an enlarged diagram of the main parts of a busbar cover of the connection busbar of FIG. 20.
FIG. 22 is a diagram illustrating a sub-busbar of the connection busbar of FIG. 20.
FIGS. 23 and 24 are diagrams illustrating the injection of a filling member through a busbar hole of a busbar cover of the connection busbar of FIG. 20.
FIG. 25 is a diagram illustrating a vehicle according to an embodiment of the present disclosure.

### BEST MODE

The present disclosure will become apparent by describing an exemplary embodiment of the present disclosure in detail with reference to the accompanying drawings. The embodiment described herein is provided by way of illustration to help an understanding of the present disclosure, and it should be understood that various modifications may be made to the present disclosure. Additionally, to help an understanding of the present disclosure, the accompanying drawings are not shown in true scale and may depict some exaggerated elements.

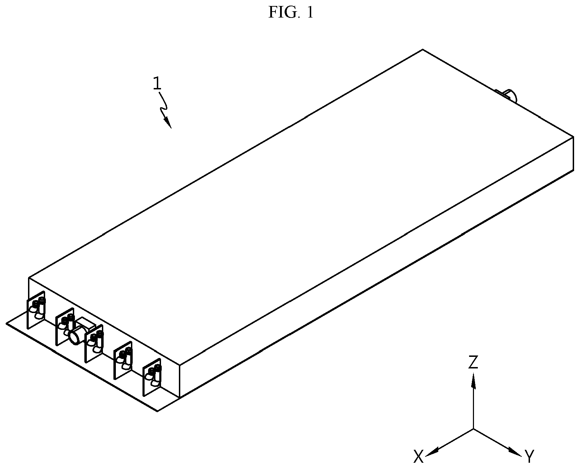

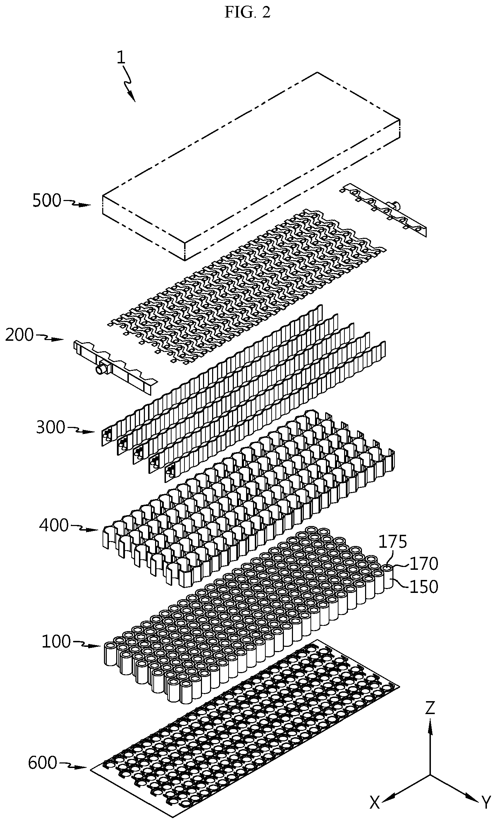

FIG. 1 is a diagram illustrating a battery pack according to an embodiment of the present disclosure, and FIG. 2 is an exploded perspective view of the battery pack of FIG. 1.

Referring to FIGS. 1 and 2, the battery pack 1 may be provided in an electric vehicle or a hybrid electric vehicle as an energy source. Hereinafter, the battery pack 1 provided in the electric vehicle will be described in more detail in the accompanying relevant drawings.

The battery pack 1 may include a battery cell assembly 100, a busbar assembly 200, a cooling unit 300 and an S-structure unit 400.

A plurality of battery cells 150 may include secondary batteries, for example, cylindrical secondary batteries, pouch-type secondary batteries or prismatic secondary batteries. Hereinafter, this embodiment is described based on the cylindrical secondary batteries as the plurality of battery cells 150.

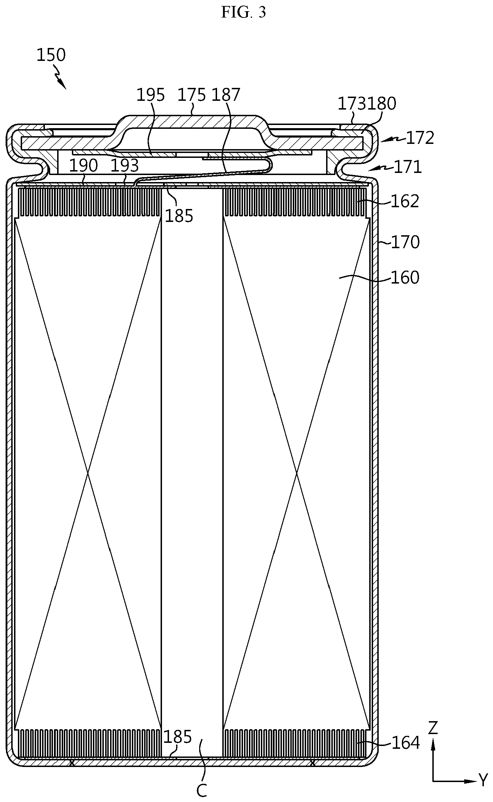

FIG. 3 is a diagram illustrating the battery cell of the battery cell assembly of the battery pack of FIG. 2.

Referring to FIG. 3 together with FIG. 2, the plurality of battery cells 150 may be stacked and electrically connected to each other. The plurality of battery cells 150 may have positive electrodes 175 and negative electrodes 170 on top. Specifically, the positive electrode 175 of the battery cell 150 may be at the center of the top of the battery cell 150, and the negative electrode 170 of the battery cell 150 may be at the edge of the top of the battery cell 150.

In this embodiment, as described above, both the positive electrodes 175 and the negative electrodes 170 of the plurality of battery cells 150 may be on one side (+Z axis direction) of the battery cells 150, to be specific, the upper side (+Z axis direction) of the battery cells 150, making it easier to establish an electrical connection to the busbar assembly 200 as described below.

Accordingly, in this embodiment, since the positive electrodes 175 and the negative electrodes 170 of the plurality of battery cells 150 are positioned in the same direction (+Z axis direction), it is possible to simplify the structure of connection to the busbar assembly 200 as described below and reduce the volume occupied by the electrical connection structure, compared to the positive electrodes and the negative electrodes positioned in either direction.

Accordingly, in this embodiment, it is possible to achieve the compact structure and improved energy density of the battery pack 1 by simplifying the electrical connection structure between the battery cells 150 and the busbar assembly 200 as described below.

Hereinafter, the battery cell 150 will be described in more detail.

The battery cell 150 may include an electrode assembly 160, a battery can 170 and a top cap 175. In addition to the above-described components, the battery cell 150 may further include a sealing gasket 180, a current collector plate 185, an insulation plate 190 and a connection plate 195.

The electrode assembly 160 includes a first electrode plate having a first polarity, a second electrode plate having a second polarity and a separator interposed between the first electrode plate and the second electrode plate. The electrode assembly 160 may have a jelly-roll shape. That is, the electrode assembly 160 may be made by winding a stack around a winding center C, the stack formed by stacking the first electrode plate, the separator, the second electrode plate at least once in a sequential order. In this case, the separator may be on the outer circumferential surface of the electrode assembly 160 for insulation from the battery can 170. The first electrode plate corresponds to a positive or negative electrode plate, and the second electrode plate corresponds to an electrode plate having the opposite polarity to the first electrode plate.

The first electrode plate includes a first electrode current collector and a first electrode active material coated on one or two surfaces of the first electrode current collector. The first electrode current collector has an uncoated region at one end in the widthwise direction (parallel to the Z axis), the uncoated region in which the first electrode active material is not coated. The uncoated region acts as a first electrode tab 162. The first electrode tab 162 is at the upper part of the electrode assembly 160 received within the battery can 170 in the heightwise direction (parallel to the Z axis).

The second electrode plate includes a second electrode current collector and a second electrode active material coated on one or two surfaces of the second electrode current collector. The second electrode current collector has an uncoated region at the other end in the widthwise direction (parallel to the Z axis), the uncoated region in which the second electrode active material is not coated. The uncoated region acts as a second electrode tab 164. The second electrode tab 164 is at the lower part of the electrode assembly 160 received within the battery can 170 in the heightwise direction (parallel to the Z axis).

The battery can 170 is a cylindrical container having an opening on top, and is made of a metal having conductive properties. The battery can 170 receives the electrode assembly 160 through the top opening, together with an electrolyte.

The battery can 170 is electrically connected to the second electrode tab 164 of the electrode assembly 160. Accordingly, the battery can 170 has the same polarity as the second electrode tab 164. In this embodiment, the battery can 170 may act as the negative electrode 170.

The battery can 170 includes a beading portion 171 and a crimping portion 172 at the upper end. The beading portion 171 is on the electrode assembly 160. The beading portion 171 is formed by pressing inwards around the outer circumferential surface of the battery can 170. The beading portion 171 may prevent the electrode assembly 160 having a size corresponding to the width of the battery can 170 from slipping out through the top opening of the battery can 170, and act as a support on which the top cap 175 is seated.

A top edge 173 of the beading portion 171 of the battery can 170 may be inserted into or placed in contact with a guide groove 249 of a negative electrode connection portion 248 of the busbar assembly 200 as described below. This is to make a welding process easier in the welding process for electrical connection between the busbar assembly 200 as described below and the battery can 170 that acts as the negative electrode 170.

The crimping portion 172 is on the beading portion 171. The crimping portion 172 is extended and bent to cover the outer circumferential surface of the top cap 175 on the beading portion 171 and part of the upper surface of the top cap 175.

The top cap 175 is the component made of a metal having conductive properties, and covers the top opening of the battery can 170. The top cap 175 is electrically connected to the first electrode tab 162 of the electrode assembly 160, and is electrically insulated from the battery can 170. Accordingly, the top cap 175 may act as the positive electrode 175 of the battery cell 150.

The top cap 175 is seated on the beading portion 171 of the battery can 170, and is fixed by the crimping portion 172. The sealing gasket 180 may be interposed between the top cap 175 and the crimping portion 172 of the battery can 170 to ensure sealability of the battery can 170 and electrical insulation between the battery can 170 and the top cap 175.

The top cap 175 may have a protruding part that protrudes upwards from the center. The protruding part may guide the contact with an electrical connection component, for example, busbars.

The current collector plate 185 is coupled to the upper surface of the electrode assembly 160. The current collector plate 185 is made of a metal having conductive properties, and is connected to the first electrode tab 162. A lead 187 may be connected to the current collector plate 185, and the lead 187 may be extended upwards from the electrode assembly 160 and directly coupled to the top cap 175 or coupled to the connection plate 195 coupled to the lower surface of the top cap 175.

The current collector plate 185 is coupled to the end of the first electrode tab 162. The coupling between the first electrode tab 162 and the current collector plate 185 may be accomplished by, for example, laser welding. The laser welding may be performed by partially melting the base material of the current collector plate 185, and may be performed with solders for welding interposed between the current collector plate 185 and the first electrode tab 162. In this case, the solders may have a lower melting point than the current collector plate 185 and the first electrode tab 162.

The current collector plate 185 may be also coupled to the lower surface of the electrode assembly 160. In this case, a surface of the current collector plate 185 may be coupled to the second electrode tab 164 of the electrode assembly 160 by welding, and the opposite surface may be coupled to the inner bottom surface of the battery can 170 by welding. The coupling structure of the current collector plate 185 coupled to the lower surface of the electrode assembly 160 and the second electrode tab 164 is substantially the same as the current collector plate 185 coupled to the upper surface of the electrode assembly 160 described above.

The insulation plate 190 is between the upper end of the electrode assembly 160 and the beading portion 171 or between the current collector plate 185 coupled to the upper surface of the electrode assembly 160 and the beading portion 171 to prevent the contact between the first electrode tab 162 and the battery can 170 or the contact between the current collector plate 185 and the battery can 170.

The insulation plate 190 has a lead hole 193 through which the lead 187 extended upwards from the current collector plate 185 or the first electrode tab 162 may come out. The lead 187 is extended upwards through the lead hole 193 and coupled to the lower surface of the connection plate 195 or the lower surface of the top cap 175.

As described above, the battery cell 150 according to an embodiment of the present disclosure has a structure in which the top cap 175 on the upper side and the top edge 173 of the battery can 170 in the lengthwise direction (parallel to the Z axis in FIG. 2) of the battery can 170 are used as the positive electrode 175 and the negative electrode 170, respectively. Accordingly, in electrically connecting the plurality of battery cells 150 according to an embodiment of the present disclosure, it is possible to place the electrical connection component such as the busbar assembly 200 on only one side of the battery cells 150, thereby simplifying the structure and improving the energy density.

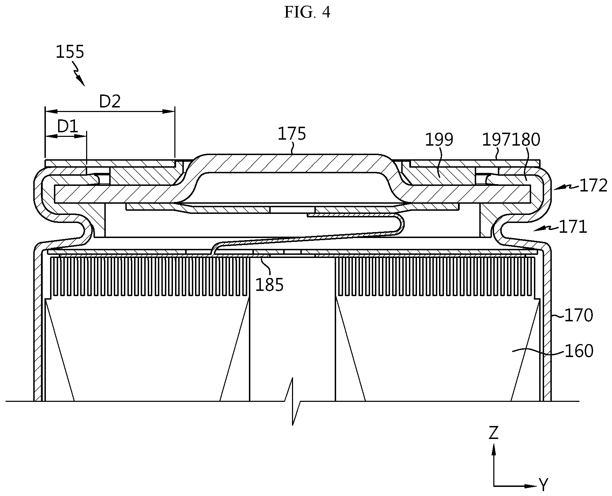

FIG. 4 is a diagram illustrating a battery cell according to another embodiment of the battery cell assembly of FIG. 3.

Since the battery cell 155 according to this embodiment is similar to the battery cell 150 of the previous embodiment, the overlapping description of the substantially identical or similar elements to the previous embodiment is omitted, and hereinafter, a description will be made based on difference(s) between this embodiment and the previous embodiment.

Referring to FIG. 4, in addition to the components of the battery cell 150 previously described, the battery cell 155 may further include a metal washer 197 and an insulation washer 199.

The metal washer 197 is the component that is made of a metal having conductive properties, and is approximately in the shape of a disc having a hole at the center. The metal washer 197 is coupled on the crimping portion 172 of the battery can 170. The coupling between the metal washer 197 and the crimping portion 172 may be accomplished by, for example, laser welding.

The metal washer 197 is electrically insulated from the top cap 175. The top cap 175 is exposed through the hole at the center of the metal washer 197, and the metal washer 197 is spaced apart from the protruding part at the center of the top cap 175. Additionally, the metal washer 197 is vertically spaced apart from the remaining part except the protruding part of the top cap 175. Accordingly, the metal washer 197 is electrically connected to the second electrode tab 164 and the battery can 170, and may act as the negative electrode of the battery cell 155.

The metal washer 197 has a width D2 that is larger than a width D1 of the upper surface of the crimping portion 172 of the battery can 170. This is to increase the coupling area between the electrical connection component and the metal washer 197 when coupling the electrical connection component such as the busbar assembly 200 to the metal washer 197 to connect the plurality of battery cells 150. As described above, as the coupling area between the electrical connection component and the metal washer 197 increases, the welding process may be smoothly performed, thereby improving the bonding strength between the two components and reducing the electrical resistance at the coupled part.

The insulation washer 199 is interposed between the top cap 175 and the metal washer 197. The insulation washer 199 is made of a material having insulating properties. In the battery cell 155 according to an embodiment of the present disclosure, since the top cap 175 acts as the positive electrode and the metal washer 197 acts as the negative electrode, the top cap 175 and the metal washer 197 need to maintain the electrical insulation condition. Accordingly, the insulation washer 199 may be preferably applied to stably maintain the insulation condition.

The insulation washer 199 is interposed between the lower surface of the metal washer 197 and the top cap 175. As described above, the metal washer 197 has the width D2 that is larger than the width D1 of the upper surface of the crimping portion 172, and is extended from the crimping portion 172 to the protruding part at the center of the top cap 175. Accordingly, the insulation washer 199 may be extended to cover the inner surface of the hole at the center of the metal washer 197 to prevent the contact between the inner surface of the hole at the center of the metal washer 197 and the protruding part of the top cap 175.

When the insulation washer 199 is made of resin, the insulation washer 199 may be coupled to the metal washer 197 and the top cap 175 by heat fusion. In this case, it is possible to enhance sealability at the coupling interface between the insulation washer 199 and the metal washer 197 and the coupling interface between the insulation washer 199 and the top cap 175.

Hereinafter, the busbar assembly 200 for electrical connection to the plurality of battery cells 150 will be described in more detail.

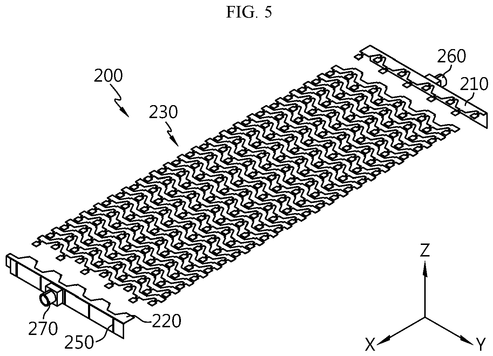

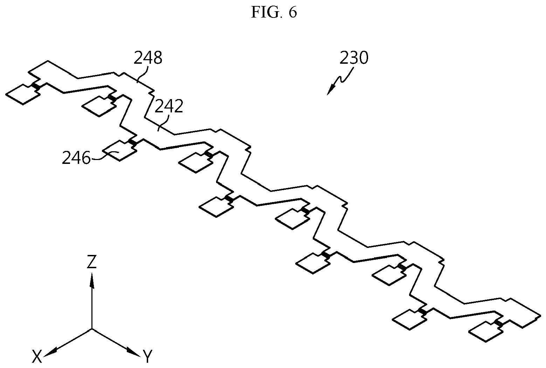

FIG. 5 is a perspective view of the busbar assembly of the battery pack of FIG. 2, and FIG. 6 is a perspective view of a connection busbar of the busbar assembly of FIG. 5.

Referring to FIGS. 5 and 6, the busbar assembly 200 may be on the upper side (+Z axis direction) of the battery cell assembly 100, and electrically connected to the plurality of battery cells 150. The electrical connection of the busbar assembly 200 may be parallel connection and/or series connection.

The busbar assembly 200 may be electrically connected to the positive electrodes 175 (see FIG. 3) and the negative electrodes 170 (see FIG. 3) of the plurality of battery cells 150 (see FIG. 2) through an external charge/discharge line and connectors 260, 270.

Hereinafter, the components of the busbar assembly 200 will be described in more detail.

The busbar assembly 200 may include a pair of main busbars 210, 220, the connection busbar 230, a cooling unit insertion slit 250 and the pair of connectors 260, 270.

The pair of main busbars 210, 220 may include the connectors 260, 270, respectively, electrically connected to the battery cell assembly 100 and connected to the external charge/discharge line.

The pair of main busbars 210, 220 may be electrically connected to the battery cells 150 on the two outermost sides (X axis direction) among the battery cells 150 of the battery cell assembly 100. Specifically, the pair of main busbars 210, 220 may be each electrically connected to the battery cells 150 on the outermost sides in the lengthwise direction (X axis direction) of the battery cell assembly 100.

The pair of main busbars 210, 220 may include the main positive busbar 210 and the main negative busbar 220.

The main positive busbar 210 may be positioned on one side (-X axis direction) of the busbar assembly 200 on the upper side (+Z axis direction) of the battery cell assembly 100. The main positive busbar 210 may be electrically connected to the positive electrodes 175 of the battery cells 150 on one outermost side (-X axis direction) of the battery cell assembly 100. The electrical connection may be performed through a welding process for electrical connection, such as laser welding or ultrasonic welding.

The main positive busbar 210 may include the positive connector 260 as described below for connection to the charge/discharge line. The positive connector 260 may stand out on one side (-X axis direction) of the main positive busbar 210.

The main negative busbar 220 may be positioned on the other side (+X axis direction) of the busbar assembly 200 on the upper side (+Z axis direction) of the battery cell assembly 100. The main negative busbar 220 may be electrically connected to the negative electrodes 170 of the battery cells 150 on the other outermost side (+X axis direction) of the battery cell assembly 100. The electrical connection may be performed through a welding process for electrical connection, such as laser welding or ultrasonic welding.

The main negative busbar 220 may include the negative connector 270 as described below for connection to the charge/discharge line. The negative connector 270 may stand out on the other side (+X axis direction) of the main negative busbar 220.

The busbar assembly 200 may include a plurality of connection busbars 230 for electrical connection of the plurality of battery cells 150. The plurality of connection busbars 230 may be electrically connected to the pair of main busbars 210, 220, and may be connected to the positive electrodes 175 and the negative electrodes 170 of the plurality of battery cells 150.

The plurality of connection busbars 230 may be arranged spaced a predetermined distance apart from each other along the lengthwise direction (X axis direction) of the battery cell assembly 100. Furthermore, the plurality of connection busbars 230 may be arranged between the main positive busbar 210 and the main negative busbar 220 in the lengthwise direction (X axis direction) of the busbar assembly 200.

Each of the plurality of connection busbars 230 may include a layer body 242 and electrode connection portions 246, 248.

The layer body 242 may have a predetermined length along the widthwise direction (Y axis direction) of the battery cell assembly 100. The layer bodies 242 may be arranged in a pattern corresponding to the arrangement structure of the battery cells 150 in the widthwise direction (Y axis direction) of the battery cell assembly 100 for electrical connection to the battery cells 150.

The layer body 242 may include a conductive material. For example, the layer body 242 may include a metal, for example, aluminum or copper. The layer body 242 is not limited thereto, and may include any other material for the electrical connection.

The layer body 242 may have a support layer on bottom. The support layer may be on the bottom of the layer body 242 (-Z axis direction) to support the layer body 242. The support layer may have a shape that conforms to the layer body 242, and may be fixed in contact with the bottom (-Z axis direction) of the layer body 242.

The support layer may include an insulation material to prevent an electrical short between the plurality of battery cells 150 and the layer body 242. For example, the support layer may include a polyimide film. The support layer is not limited thereto, and may include any other insulation member made of an insulation material.

The electrode connection portions 246, 248 may protrude from the layer body 242 and may be connected to the positive electrodes 175 and the negative electrodes 170 of the battery cells 150. Specifically, the electrode connection portions 246, 248 may include the positive electrode connection portion 246 and the negative electrode connection portion 248.

The connection busbar 230 may include a plurality of positive electrode connection portions 246, and the plurality of positive electrode connection portions 246 may protrude to a predetermined size on one side (+X axis direction) of the layer body 242 and may be arranged spaced a predetermined distance apart from each other along the lengthwise direction (Y axis direction) of the layer body 242.

The plurality of positive electrode connection portions 246 may be electrically connected to the positive electrodes 175 of the battery cells 150 of the battery cell assembly 100 below the busbar assembly 200 (-Z axis direction). The electrical connection may be performed by a welding process for electrical connection, such as laser welding or ultrasonic welding.

The connection busbar 230 may include a plurality of negative electrode connection portions 248, and the plurality of negative electrode connection portions 248 may protrude to a predetermined size on the other side (-X axis direction) of the layer body 242 and may be arranged spaced a predetermined distance apart from each other along the lengthwise direction (Y axis direction) of the layer body 242.

The plurality of negative electrode connection portions 248 may be electrically connected to the negative electrodes 170 of the battery cells 150 of the battery cell assembly 100 below the busbar assembly 200 (-Z axis direction). The electrical connection may be performed by a welding process for electrical connection, such as laser welding or ultrasonic welding.

The cooling unit insertion slit 250 may be provided in the main busbar 220, and allow one end 370 of the cooling unit 300 as described below to pass through. Specifically, a plurality of cooling unit insertion slits 250 may be provided in the main negative busbar 220, and allow the coolant inlet/outlet portion 370 of the cooling unit 300 as described below to pass through. The coolant inlet/outlet portion 370 as described below may pass through the cooling unit insertion slit 250, and in the same way as the connector 270 as described below, may be exposed through the front side of the main busbar 220 (+X axis direction).

The pair of connectors 260, 270 may be configured to connect to the external charge/discharge line, and include the positive connector 260 and the negative connector 270. The positive connector 260 may protrude to one side (-X axis direction) of the main positive busbar 210, and the negative connector 270 may protrude to the other side (+X axis direction) of the main negative busbar 220.

Referring back to FIG. 2, the cooling unit 300 may be configured to cool the battery cell assembly 100. The cooling unit 300 may be positioned below the busbar assembly 200 (-Z axis direction). The cooling unit 300 may be positioned between the plurality of battery cells 150 along the lengthwise direction (X axis direction) of the battery cell assembly 100.

The battery pack 1 may include a plurality of cooling units 300.

The plurality of cooling units 300 may be arranged facing the plurality of battery cells 150 in the widthwise direction (Y axis direction) of the plurality of battery cell assemblies 100. Here, to increase the cooling performance, the plurality of cooling units 300 may be placed in contact with the battery cells 150 that the cooling units 300 face.

Hereinafter, the cooling unit 300 will be described in more detail.

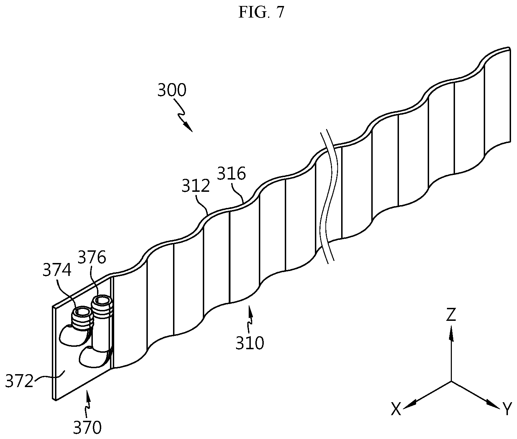

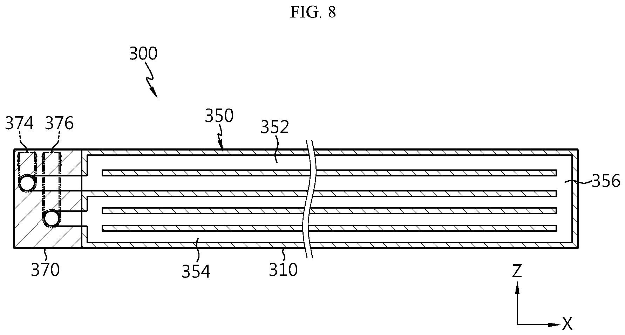

FIG. 7 is a perspective view of the cooling unit of the battery pack of FIG. 2, and FIG. 8 is a cross-sectional view of the cooling unit of FIG. 7.

Referring to FIGS. 7 and 8 together with FIG. 2, the cooling unit 300 may include a cooling tube 310, a cooling channel 350 and the coolant inlet/outlet portion 370.

The cooling tube 310 may have a predetermined length along the lengthwise direction (X axis direction) of the battery cell assembly 100. The cooling tube 310 may be positioned between the plurality of battery cells 150. The cooling tube 310 may include the cooling channel 350 for coolant circulation as described below.

The cooling tube 310 may have a shape that conforms to the outer surface of the plurality of facing battery cells 150 in the widthwise direction (Y axis direction) of the battery cell assembly 100.

The cooling tube 310 may include a plurality of convex portions 312 and a plurality of concave portions 316. The convex portion and the concave portion may be convex and concave in the widthwise direction (Y axis direction) of the battery cell assembly 100, respectively. The convex portions 312 and the concave portions 316 may be arranged in an alternate manner along the lengthwise direction (X axis direction) of the battery cell assembly.

The cooling tube 310 may be placed in contact with the outer surface of the plurality of battery cells 150 to further increase the cooling performance of the battery cell assembly 100. The cooling tube 310 may be adhered and fixed to the plurality of battery cells 150 through a filling member 500 as described below or any other adhesion member.

The cooling channel 350 may allow circulation of the coolant for cooling the battery cell assembly 100. The cooling channel 350 may be provided in the cooling tube 310. The cooling channel 350 may be connected in communication with the coolant inlet/outlet portion 370 as described below.

The cooling channel 350 may include an upper channel 352, a lower channel 354 and a connection channel 356.

The upper channel 352 may be positioned at the upper part of the cooling tube 310 to get closer to the busbar assembly 200, and may have a predetermined length along the lengthwise direction (X axis direction) of the cooling tube 310. The upper channel 352 may be connected in communication with a coolant feed port 374 of the coolant inlet/outlet portion 370.

The cooling channel 350 may include at least one upper channel 352. Hereinafter, this embodiment is described based on the cooling channel 350 including the plurality of upper channels 352 to ensure the cooling performance.

The lower channel 354 may be positioned at the lower part of the cooling tube 310 (-Z axis direction) spaced apart from the at least one upper channel 352, and may have a predetermined length along the lengthwise direction (X axis direction) of the cooling tube 310. The lower channel 354 may be connected in communication with a coolant exit port 376 of the coolant inlet/outlet portion 370.

The cooling channel 350 may include at least one lower channel 354. Hereinafter, this embodiment is described based on the cooling channel 350 including the plurality of lower channels 354 to ensure the cooling performance.

The connection channel 356 may connect the at least one upper channel, in this embodiment, the plurality of upper channels 352 to the at least one lower channel, in this embodiment, the plurality of lower channels 354.

The connection channel 356 may be at the other end (+X axis direction) of the cooling tube 310 opposite the coolant inlet/outlet portion 370 to maximize the cooling channel 350.

In this embodiment, while the coolant circulates in the cooling channel 350, the coolant supplied from the coolant feed port 374 may be first supplied to the upper channel 352 positioned close to the busbar assembly 200 and flow to the coolant exit port 376 through the connection channel 356 and the lower channel 354.

Accordingly, in this embodiment, since the cold coolant is first supplied to the area near the busbar assembly 200 having a higher temperature distribution in the battery pack 1, it is possible to significantly improve the cooling performance of the battery cell assembly 100.

The coolant inlet/outlet portion 370 may be connected to the cooling tube 310 to communicate with the cooling channel 350 of the cooling tube 310. The coolant inlet/outlet portion 370 may be connected in communication with an external cooling line through the cooling unit insertion slit 250.

The coolant inlet/outlet portion 370 may be on one side (+X axis direction) in the lengthwise direction (X axis direction) of the battery cell assembly 100. The cooling tube 310 connected to the coolant inlet/outlet portion 370 may have a predetermined length from the coolant inlet/outlet portion 370 toward the other side (-X axis direction) of the battery cell assembly 100 in the lengthwise direction (X axis direction) of the battery cell assembly 100.

The coolant inlet/outlet portion 370 may include an inlet/outlet body 372, the coolant feed port 374 and the coolant exit port 376.

The inlet/outlet body 372 may be connected to one end (+X axis direction) of the cooling tube 310. A connection pipe 390 as described below may be provided above the inlet/outlet body 372 (+Z axis direction).

The coolant feed port 374 may be provided in the inlet/outlet body 372, and may be connected in communication with the upper channel 352. The coolant feed port 374 may be connected in communication with the external cooling line.

The coolant exit port 376 may be in the inlet/outlet body 372 and connected in communication with the lower channel 354. The coolant exit port 376 may be spaced a predetermined distance apart from the coolant feed port 374, and may be connected in communication with the external cooling line.

Referring back to FIG. 2, the S-structure unit 400 may be configured to ensure the strength of the battery cell assembly 100, and may be disposed around at least part of the cooling unit 300 and the battery cell assembly 100.

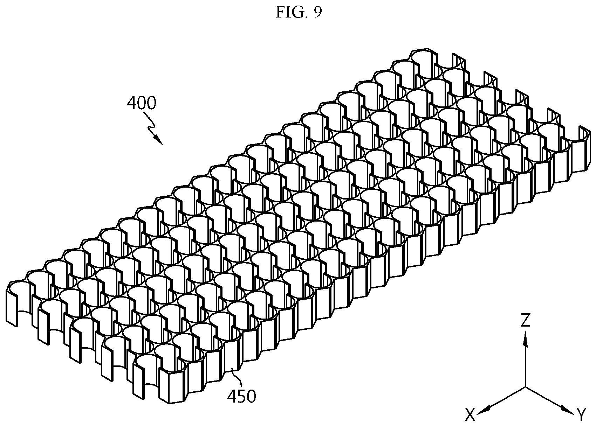

FIG. 9 is a perspective view of the S-structure unit of the battery pack of FIG. 2.

Referring to FIG. 9 together with FIG. 2, the S-structure unit 400 may include at least one S-structure bar 450 having a predetermined length along the lengthwise direction (X axis direction) of the battery cell assembly 100 to cover at least one surface of the battery cells 150. The at least one S-structure bar 450 may have a shape that conforms to the outer surface of the plurality of facing battery cells 150.

The S-structure unit 400 may include a plurality of S-structure bars 450, and the plurality of S-structure bars 450 may be arranged spaced a predetermined distance apart from each other along the widthwise direction (Y axis direction) of the battery cell assembly 100.

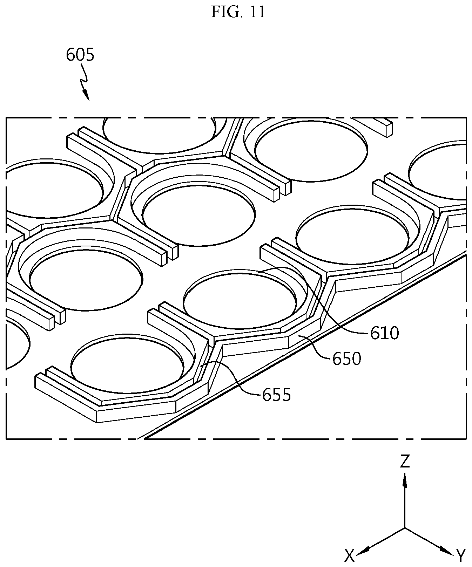

The cooling unit 300 may be positioned between the plurality of S-structure bars 450. Specifically, the cooling unit 300 may be positioned between the plurality of S-structure bars 450 in the widthwise direction (Y axis direction) of the battery cell assembly 100. More specifically, the plurality of cooling tubes 310 (see FIG. 11) of the cooling unit 300 may be positioned between the plurality of S-structure bars 450.

The plurality of S-structure bars 450 may not only ensure the strength of the battery cell assembly 100 and the cooling unit 300 but also reduce the injection volume of the filling member 500 as described below since the S-structure bars 450 occupy a predetermined space in the battery pack 1. As the filling member 500 including a silicone resin as described below has a relatively high cost, it is possible to improve the price competitiveness in the fabrication of the battery pack 1 by reducing the injection volume of the silicone resin through the plurality of S-structure bars 450.

Referring back to FIG. 2, the filling member 500 may be filled in a space between the cooling unit 300 and the plurality of battery cells 100 in the heightwise direction (Z axis direction) of the battery pack 1. In FIG. 2, the filling member 500 is indicated by the dashed line of a cubic shape for convenience of understanding, and the filling member 500 may be completely filled in the space between the cooling unit 300 and the plurality of battery cells 100.

The filling member 500 may fix the plurality of battery cells 150 more stably and increase the thermal dispersion efficiency of the plurality of battery cells 150, thereby further increasing the cooling performance of the battery cells 150.

The filling member 500 may include a potting resin. The potting resin may be formed by injecting a thin resin material into the plurality of battery cells 150 and curing it. Here, the injection of the resin material may be performed at room temperature of approximately 15°C to 25°C to prevent the thermal damage to the plurality of battery cells 150.

Specifically, the filling member 500 may include a silicone resin. The filling member 500 is not limited thereto and may include any other resin material than the silicone resin, capable of fixing the battery cells 150 and improving the thermal dispersion efficiency.

In addition to the battery cells 150, the filling member 500 may be filled in the busbar assembly 200. Specifically, the battery cells 150 may be filled in the busbar assembly 200 to cover at least part of the busbar assembly 200.

Here, the filling member 500 may be continuously filled in between the busbar assembly 200 and the battery cells 100 without discontinuity or a gap between the busbar assembly 200 and the battery cells 100, in the vertical direction (Z axis direction) of the battery cell assembly 100.

Since the filling member 500 according to this embodiment is continuously filled in the battery cells 100 and the busbar assembly 200 without discontinuity, it is possible to achieve uniform thermal dispersion in the area between the battery cells 100 and the busbar assembly 200 without thermal dispersion deviation, thereby significantly increasing the cooling performance of the battery pack 1.

Furthermore, the filling member 500 may be filled to completely cover the S-structure unit 400 as described below. Here, the filling member 500 may be continuously filled in the battery cells 100, the busbar assembly 200 and the S-structure unit 400 without discontinuity. Accordingly, it is possible to further improve the cooling performance of the battery pack 1.

Additionally, the filling member 500 may be filled to cover at least part of a bottom plate 600 as described below. Here, the filling member 500 may be continuously filled in the battery cells 100, the busbar assembly 200, the cooling unit 300 and the S-structure unit 400 without discontinuity. Accordingly, it is possible to further improve the cooling performance of the battery pack 1.

Here, the filling member 500 may be continuously filled in the battery cells 100, the busbar assembly 200, the cooling unit 300, the S-structure unit 400 and the bottom plate 600 without discontinuity. Accordingly, it is possible to further improve the cooling performance of the battery pack 1.

More specifically, the filling member 500 covers the noncontact area with the cooling tubes 310 of the battery cells 100 to guide the thermal equilibrium of the battery cells 100, thereby preventing the cooling deviation of the battery cells 100 and avoiding local degradation of the battery cells 100. Additionally, it is possible to significantly improve the safety of the battery cells 100 by preventing the local degradation of the battery cells 100.

Additionally, the filling member 500 may act as an insulator to prevent the conduction of electricity to the adjacent battery cells 100 when damage caused by a fault or failure occurs in at least one specific battery cell 100 among the plurality of battery cells 100.

Additionally, the filling member 500 may include a material having high specific heat performance. Accordingly, the filling member 500 may increase the thermal mass to retard the temperature rise of the battery cells 100, for example, in the fast charge/discharge of the battery cells 100, thereby preventing the sharp rise in temperature of the battery cells 100.

Additionally, the filling member 500 may include glass bubble. The glass bubble may increase the energy density relative to weight by reducing the specific gravity of the filling member 500.

Additionally, the filling member 500 may include a material having high heat resistance performance. Accordingly, when a thermal event occurs due to overheat in at least one specific battery cell 100 among the plurality of battery cells 100, the filling member 500 may effectively prevent thermal runaway to the adjacent battery cells.

Additionally, the filling member 500 may include a material having high flame retardancy performance. Accordingly, the filling member 500 may minimize fire risks when a thermal event occurs due to overheat in at least one specific battery cell 100 among the plurality of battery cells 100.

Referring back to FIG. 2, the battery pack 1 may further include the bottom plate 600.

The bottom plate 600 may be below the S-structure unit 400 to support the battery cell assembly 100 and the cooling unit 300. Furthermore, the bottom plate 600 may ensure the strength of the battery pack 1.

Hereinafter, the bottom plate 600 will be described in more detail.

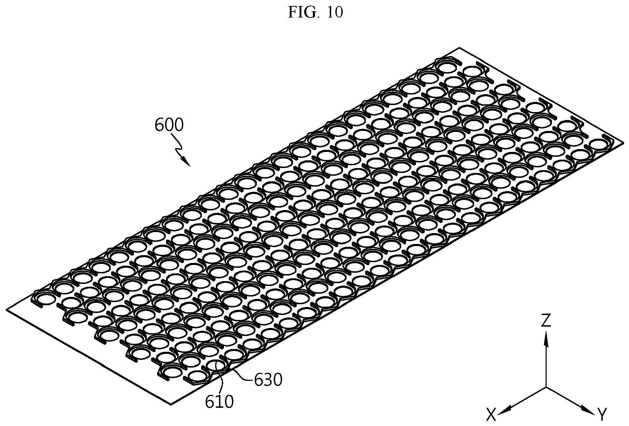

FIG. 10 is a perspective view of the bottom plate of the battery pack of FIG. 2.

Referring to FIG. 10, the bottom plate 600 may include a cell mounting portion 610 and an S-structure support rib 630.

The cell mounting portion 610 may be an opening having a predetermined size. The bottom plate 600 may include a plurality of cell mounting portions 610 corresponding to the number of battery cells 150. The plurality of battery cells 150 may be seated on the cell mounting portions 610 or may be inserted into and mounted on the cell mounting portions 610.

The S-structure support rib 630 may be on the upper surface of the bottom plate 600 and may protrude to a predetermined height to support the bottom of the S-structure unit 400. The S-structure support rib 630 may have a predetermined length along the lengthwise direction (X axis direction) of the battery cell assembly 100.

The bottom plate 600 may include a plurality of S-structure support ribs 630, and the cooling unit 300, to be specific, the cooling tubes 310 of the cooling unit 300 may be positioned between the plurality of S-structure support ribs 630. Accordingly, the cooling tubes 310 may be seated between the S-structure support ribs 630 on the upper surface of the bottom plate 600.

The bottom of the S-structure unit 400 may be seated on the plurality of S-structure support ribs 630. An adhesive member, for example, a thermal adhesive may be applied to the upper surface of the plurality of S-structure support ribs 630 to support the S-structure unit 400 more stably.

FIG. 11 is a diagram illustrating S-structure support ribs according to another embodiment of the bottom plate of FIG. 10.

Referring to FIG. 11, the plurality of S-structure support ribs 650 of the bottom plate 605 may have S-structure insertion grooves 655 of a predetermined depth into which the bottom of the S-structure unit 400 is inserted.

The S-structure insertion grooves 655 may have the predetermined depth within the S-structure support ribs 650 protruding upwards (+Z axis direction) from the bottom plate 605, and may have a sufficient size to allow the bottom of the S-structure unit 400 to be inserted. When the S-structure unit 400 is fixed to the bottom plate 605, the S-structure unit 400 may be inserted into the S-structure insertion grooves 655 of the S-structure support ribs 650 and thus may be fixed to the bottom plate 605 more stably.

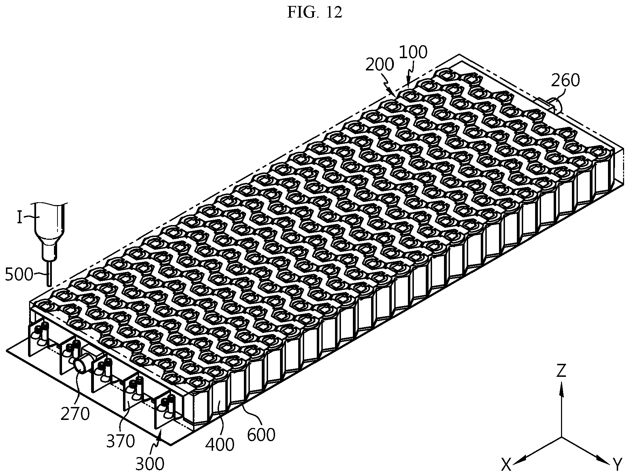

FIG. 12 is a diagram illustrating the pack case structure formation through the filling member of the battery pack of FIG. 1.

Referring to FIG. 12, the manufacturer may inject and apply the filling member 500 through a resin injector I to form a pack case of the battery pack 1 through the filling member 500 including the resin material. Here, the filling member 500 may be the silicone resin.

In this instance, to inject and apply the filling member 500 more smoothly, the battery cell assembly 100, the busbar assembly 200, the cooling unit 300, the S-structure unit 400 and the bottom plate 600 may be assembled together, and then temporarily mounted in a mold (not shown) for guiding the injection of the filling member 500. Here, the mold may conform to the shape of the pack case, and may have a shape that exposes the component connected to an external device, such as the positive connector 260, the negative connector 270, the coolant inlet/outlet portion 370 and one end of the bottom plate 600.

When the filling member 500 is cured in the mold, the filling member 500 may form the pack case that forms the exterior of the battery pack 1, and subsequently, the manufacturer may remove the mold.

Accordingly, in this embodiment, since the pack case is formed through the filling member 500 including the potting resin, compared to the conventional pack case including the assembly of the plurality of plates, it is possible to simplify the assembly process of the battery pack 1 and significantly reduce the manufacturing cost, thereby improving the price competitiveness.

Furthermore, in this embodiment, compared to the conventional cell frame structure including the assembly of the plurality of plates, it is possible to reduce the total size of the battery pack 1 by means of the pack case structure formed through the filling member 500, thereby significantly increasing the energy density.

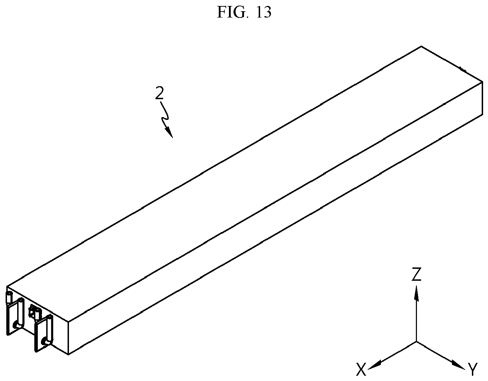

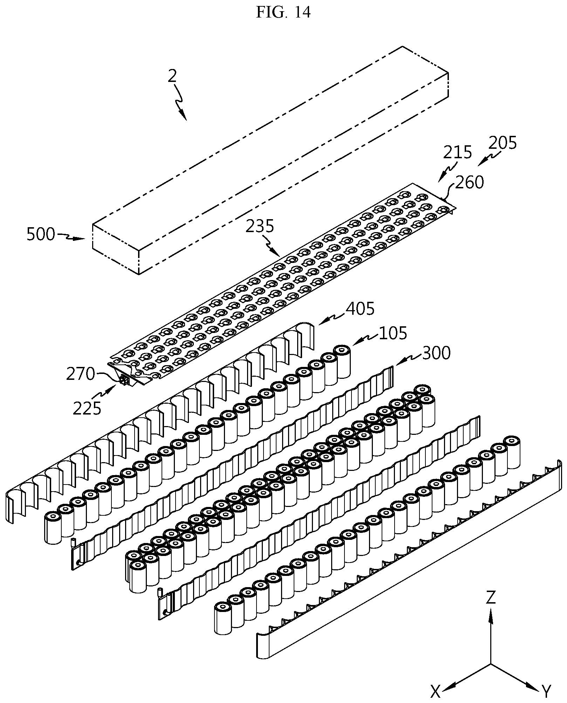

FIG. 13 is a diagram illustrating a battery pack according to another embodiment of the present disclosure, and FIG. 14 is an exploded perspective view of the battery pack of FIG. 13.

Referring to FIGS. 13 and 14, in the same way as the battery pack 1 of the previous embodiment, the battery pack 2 may be provided in an electric vehicle or a hybrid electric vehicle as an energy source.

The battery pack 2 according to this embodiment is similar to the battery pack 1 of the previous embodiment, and the following description is made based on difference(s) between the battery pack 2 according to this embodiment and the battery pack 1 of the previous embodiment.

The battery pack 2 may include a plurality of battery cells 105 and a busbar assembly 205.

In the same way as the previous embodiment, the plurality of battery cells 105 may include cylindrical secondary batteries. Hereinafter, each battery cell 105 will be described in more detail with reference to the accompanying relevant drawings.

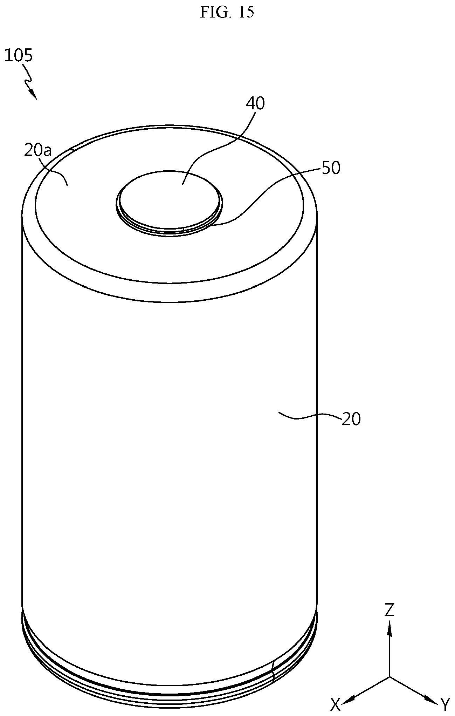

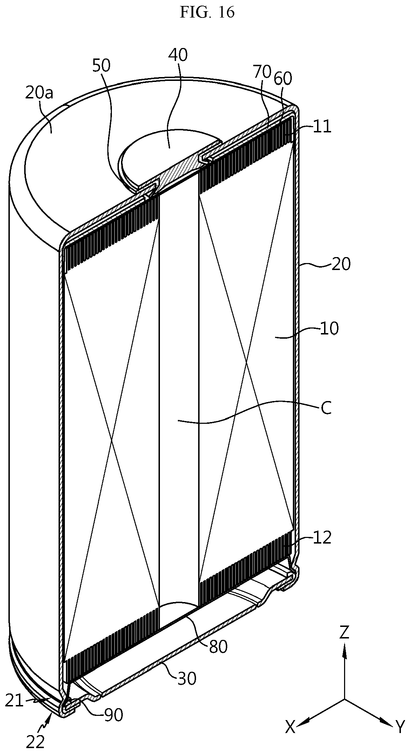

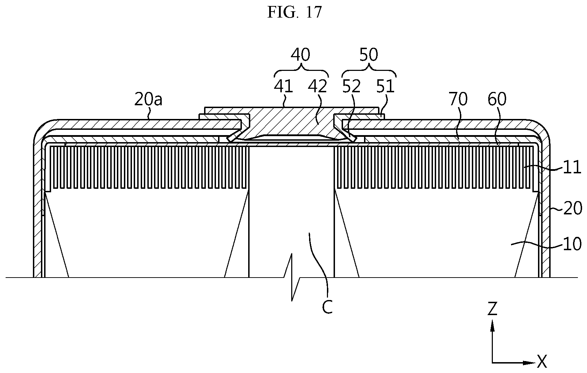

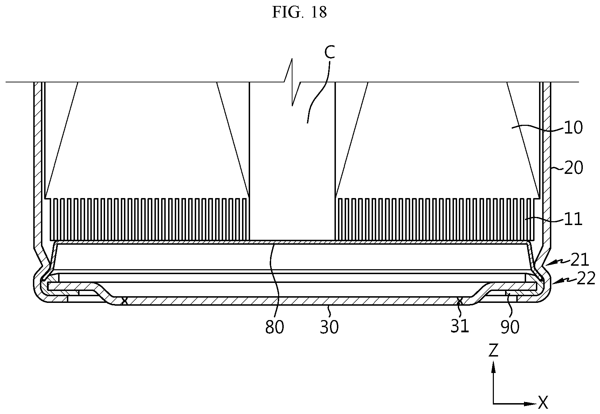

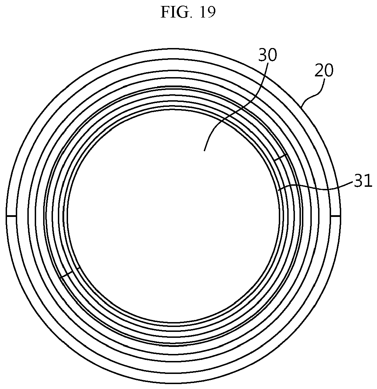

FIG. 15 is a diagram illustrating the battery cell of the battery pack of FIG. 14, FIG. 16 is a partial cross-sectional view showing the internal structure of the battery cell of FIG. 15, FIG. 17 is a partial cross-sectional view showing the upper structure of the battery cell of FIG. 15, FIG. 18 is a partial cross-sectional view showing the lower structure of the battery cell of FIG. 15, and FIG. 19 is a bottom view of the battery cell of FIG. 15.

Referring to FIGS. 15 to 19, the battery cell 105 includes an electrode assembly 10, a battery can 20, a cap plate 30 and a first electrode terminal 40. In addition to the above-described components, the battery cell 105 may further include an insulation gasket 50 and/or an upper current collector plate 60 and/or an insulation plate 70 and/or a lower current collector plate 80 and/or a sealing gasket 90.

The electrode assembly 10 includes a first electrode plate having a first polarity, a second electrode plate having a second polarity and a separator interposed between the first electrode plate and the second electrode plate. The first electrode plate corresponds to a positive or negative electrode plate, and the second electrode plate corresponds to an electrode plate having the opposite polarity to the first electrode plate.

The electrode assembly 10 may have, for example, a jelly-roll shape. That is, the electrode assembly 10 may be made by winding a stack around a winding center C, the stack formed by stacking the first electrode plate, the separator and the second electrode plate at least once in a sequential order. In this case, the separator may be on the outer circumferential surface of the electrode assembly 10 for insulation from the battery can 20.

The first electrode plate includes a first electrode current collector and a first electrode active material coated on one or two surfaces of the first electrode current collector. The first electrode current collector has an uncoated region at one end in the widthwise direction (parallel to the Z axis), the uncoated region in which the first electrode active material is not coated. The uncoated region acts as a first electrode tab. The first electrode tab 11 is at the upper part of the electrode assembly 10 received within the battery can 20 in the heightwise direction (parallel to the Z axis).

The second electrode plate includes a second electrode current collector and a second electrode active material coated on one or two surfaces of the second electrode current collector. The second electrode current collector has an uncoated region at the other end in the widthwise direction (parallel to the Z axis), the uncoated region in which the second electrode active material is not coated. The uncoated region acts as a second electrode tab 12. The second electrode tab 12 is at the lower part of the electrode assembly 10 received within the battery can 20 in the heightwise direction (parallel to the Z axis).

The battery can 20 is a cylindrical container having an opening on bottom, and is made of a metal having conductive properties. The side and the upper surface of the battery can 20 are integrally formed. The upper surface of the battery can 20 has an approximately flat shape. The battery can 20 receives the electrode assembly 10 through the opening on bottom, together with an electrolyte.

The battery can 20 is electrically connected to the second electrode tab 12 of the electrode assembly 10. Accordingly, the battery can 20 has the same polarity as the second electrode tab 12.

The battery can 20 may include a beading portion 21 and a crimping portion 22 at the lower end. The beading portion 21 is below the electrode assembly 10. The beading portion 21 is formed by pressing inwards around the outer circumferential surface of the battery can 20. The beading portion 21 may prevent the electrode assembly 10 having a size corresponding to the width of the battery can 20 from slipping out through the bottom opening of the battery can 20, and act as a support on which the cap plate 30 is seated.

The crimping portion 22 is below the beading portion 21. The crimping portion 22 is extended and bent to cover the outer circumferential surface of the cap plate 30 below the beading portion 21 and part of the lower surface of the cap plate 30.

The cap plate 30 is the component made of a metal having conductive properties, and covers the bottom opening of the battery can 20. That is, the cap plate 30 forms a lower surface of the battery cell 105. The cap plate 30 is seated on the beading portion 21 of the battery can 20 and fixed by the crimping portion 22. The sealing gasket 90 may be interposed between the cap plate 30 and the crimping portion 22 of the battery can 20 to ensure sealability of the battery can 20.

The cap plate 30 may further include a venting portion 31 to prevent the internal pressure rise caused by gas generated inside the battery can 20. The venting portion 31 has a smaller thickness than the surrounding area in the cap plate 30. The venting portion 31 is more structurally vulnerable than the surrounding area. Accordingly, when the internal pressure rises above a predetermined level due to a fault or failure in the battery cell 105, the venting portion 31 ruptures to vent gas generated inside the battery can 20.

The battery cell 105 according to an embodiment of the present disclosure has the positive electrode terminal and the negative electrode terminal on top, and by this reason, the upper structure is more complex than the lower structure. Accordingly, for smooth venting of gas generated inside the battery can 20, the venting portion 31 may be formed in the cap plate 30 that forms the lower surface of the battery cell 105.

The venting portion 31 may be continuously formed on the cap plate 30 in a circular pattern. The venting portion 31 is not limited thereto and may be discontinuously formed on the cap plate 30 in a circular pattern, and may be formed in a linear pattern or any other pattern.

The first electrode terminal 40 is made of a metal having conductive properties, and is electrically connected to the first electrode tab 11 of the electrode assembly 10 through the upper surface of the battery can 20. Accordingly, the first electrode terminal 40 has the first polarity. The first electrode terminal 40 is electrically insulated from the battery can 20 having the second polarity.

The first electrode terminal 40 includes an exposure terminal portion 41 and an insertion terminal portion 42. The exposure terminal portion 41 is exposed through the battery can 20. The exposure terminal portion 41 is disposed at the center of the upper surface of the battery can 20. The insertion terminal portion 42 is electrically connected to the first electrode tab 11 through the center of the upper surface of the battery can 20. The insertion terminal portion 42 may be coupled to the inner surface of the battery can 20 by riveting.

The upper surface of the battery can 20 and the first electrode terminal 40 have the opposite polarities and face the same direction. Additionally, a step may be formed between the first electrode terminal 40 and the upper surface of the battery can 20. Specifically, when the upper surface of the battery can 20 is flat over the entire area or protrudes upwards from the center, the exposure terminal portion 41 of the first electrode terminal 40 may protrude upwards beyond the upper surface of the battery can 20. On the contrary, when the upper surface of the battery can 20 is recessed downwards from the center, i.e., in a direction toward the electrode assembly 10, the upper surface of the battery can 20 may protrude upwards beyond the exposure terminal portion 41 of the first electrode terminal 40.

The insulation gasket 50 is interposed between the battery can 20 and the first electrode terminal 40 to prevent the contact of the battery can 20 and the first electrode terminal 40 having the opposite polarities. Accordingly, the upper surface of the battery can 20 having an approximately flat shape may act as a second electrode terminal of the battery cell 105.

The insulation gasket 50 includes an exposure portion 51 and an insertion portion 52. The exposure portion 51 is interposed between the exposure terminal portion 41 of the first electrode terminal 40 and the battery can 20. The insertion portion 52 is interposed between the insertion terminal portion 42 of the first electrode terminal 40 and the battery can 20. The insulation gasket 50 may be made of, for example, resin having insulating properties.

When the insulation gasket 50 is made of resin, the insulation gasket 50 may be coupled to the battery can 20 and the first electrode terminal 40 by heat fusion. In this case, it is possible to enhance sealability at the coupling interface between the insulation gasket 50 and the first electrode terminal 40 and the coupling interface between the insulation gasket 50 and the battery can 20.

The entire remaining area except the area occupied by the first electrode terminal 40 and the insulation gasket 50 on the upper surface of the battery can 20 corresponds to the second electrode terminal 20a having the opposite polarity to the first electrode terminal 40.

The battery cell 105 according to an embodiment of the present disclosure includes the first electrode terminal 40 having the first polarity and the second electrode terminal 20a having the second polarity electrically insulated from the first electrode terminal 40 on one side in the lengthwise direction (parallel to the Z axis). That is, since the battery cell 105 according to an embodiment of the present disclosure includes the pair of electrode terminals 40, 20a in the same direction, in electrically connecting the plurality of battery cells 105, it is possible to place the electrical connection component such as the busbar assembly 205 on only one side of the battery cells 105. This may simplify the structure of the battery pack 2 and improve the energy density.

Hereinafter, the busbar assembly 205 for electrical connection to the plurality of battery cells 105 will be described in more detail.

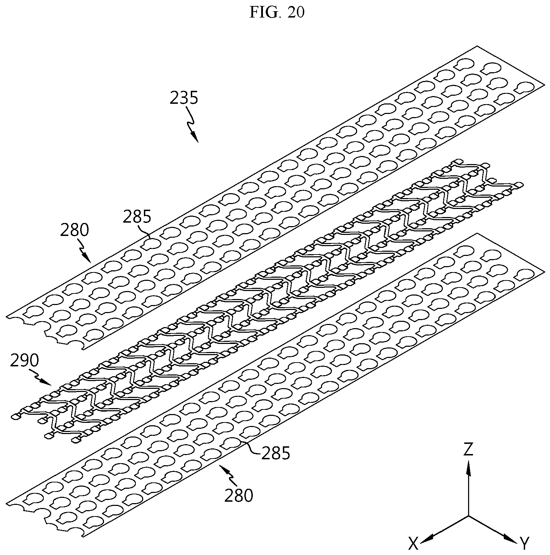

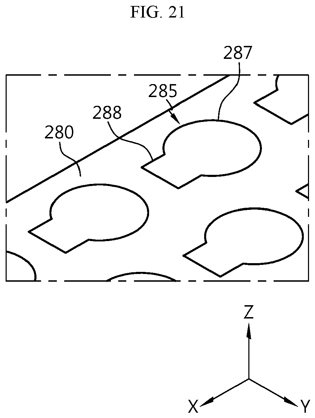

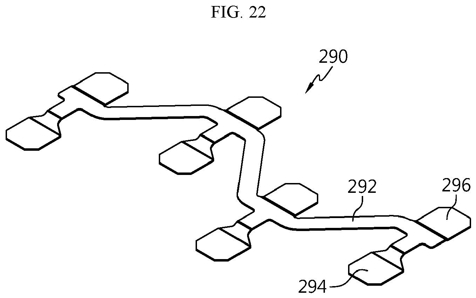

FIG. 20 is an exploded perspective view of the connection busbar of the busbar assembly of the battery pack of FIG. 13, FIG. 21 is an enlarged diagram of the main parts of a busbar cover of the connection busbar of FIG. 20, and FIG. 22 is a diagram illustrating a sub-busbar of the connection busbar of FIG. 20.

Referring to FIGS. 20 to 22 together with FIG. 14, the busbar assembly 205 may be on one side of the battery cells 105, to be specific, the upper side (+Z axis direction) of the battery cells 100, and may be electrically connected to the plurality of battery cells 105. The electrical connection of the busbar assembly 205 may be parallel connection and/or series connection.

The busbar assembly 205 may be electrically connected to the first electrode terminals 40 (see FIG. 15) of the plurality of battery cells 100 having the first polarity and the second electrode terminal 20a (FIG. 15) of the battery can 20 (see FIG. 15) having the second polarity, and may be electrically connected through an external charge/discharge line and connectors 260, 270. Here, the first polarity may be positive, and the second polarity may be negative.

Hereinafter, the components of the busbar assembly 205 will be described in more detail.

The busbar assembly 205 may include main busbars 215, 225, a connection busbar 235 and connectors 260, 270.

The busbar assembly 205 may include a pair of main busbars 215, 225, and the pair of main busbars 215, 225 may be electrically connected to the battery cells 105 on the outermost side in the lengthwise direction (X axis direction) of the battery pack 2. The pair of main busbar 215, 225 may be electrically connected to the connectors 260, 270.

The connection busbar 235 may have a sufficient size to cover all the plurality of battery cells 105 on the plurality of battery cells 105.

The connection busbar 235 may include the busbar cover 280 and the sub-busbar 290.

The busbar cover 280 may cover the upper side (+Z axis direction) of the plurality of battery cells 105, and may have an approximately flat plate shape. The busbar cover 280 may cover the sub-busbar 290 as described below. The shape and size of the busbar cover 280 may change depending on the number of battery cells 105 or the capacity required for the battery pack 2.

The busbar cover 280 may include an insulating material. For example, the busbar cover 280 may include a polyimide film. The busbar cover 280 is not limited thereto, and may include any other insulation member made of an insulating material.

The connection busbar 235 may include a pair of busbar covers 280 having the corresponding shape and size in the vertical direction (Z axis direction) of the battery pack 2, and the pair of busbar covers 280 may be coupled to each other. Here, the sub-busbar 290 as described below may be inserted in between the pair of busbar covers 280.

The busbar cover 280 may have a busbar hole 285.

The busbar hole 285 may guide the electrical connection between the battery cells 105 and the sub-busbar 290 as described below. The busbar hole 285 may have an open space having a predetermined size, and a plurality of busbar holes 285 may be provided. A positive electrode connection portion 294 and a negative electrode connection portion 296 as described below may be positioned together in each of the plurality of busbar holes 285. The open space of the busbar hole 285 may be larger than the sum of the sizes of the positive electrode connection portion 294 and the negative electrode connection portion 296 as described below to improve the workability and increase the injection efficiency of the filling member 500 as described below.

The busbar hole 285 may include a main hole 287 and an auxiliary hole 288.

The main hole 287 may have an open space having a predetermined size in the busbar cover 280. The main hole 287 may be in an approximately circular shape, and its open space may be larger than the positive electrode connection portion 294. Specifically, the open space of the main hole 287 may be larger than the sum of the sizes of the positive electrode connection portion 294 and the negative electrode connection portion 296. The positive electrode connection portion 294 as described below and the region inside the top edge of the battery cell 105 may be positioned in the main hole 287.

The auxiliary hole 288 may have an open space of a groove shape having a predetermined size extended from one end of the main hole 287. The open space of the auxiliary hole 288 may be at least equal to or larger than the size of the negative electrode connection portion 296 as described below. The negative electrode connection portion 296 as described below and part of the top edge of the battery cell 105 may be positioned in the auxiliary hole 288.

The main hole 287 and the auxiliary hole 288 of the busbar hole 285 may accommodate together, in the inner open space, the positive electrode connection portion 294 and the negative electrode connection portion 296 of the sub-busbar 290 as described below facing each other in the lengthwise direction (X axis direction) of the connection busbar 235.

The sub-busbar 290 is used to electrically connect the first electrode terminal 40 which is the positive electrode of the plurality of battery cells 105 to the second electrode terminal 20a which is the negative electrode. The sub-busbar 290 may be positioned on top of the busbar cover 280 or may be inserted into the pair of busbar covers 280.

The sub-busbar 290 may be a single layer of a strip shape having a predetermined length and width. Hereinafter, this embodiment is described based on the sub-busbar 290 inserted into the pair of busbar covers 280.

The connection between the sub-busbar 290 and the positive electrodes 40 of the battery cells 105 and the connection between the sub-busbar 290 and the negative electrodes 20a of the battery cells may be performed in the open space of the busbar hole 285.

Hereinafter, the sub-busbar 290 according to this embodiment will be described in more detail.

The connection busbar 235 may include a plurality of sub-busbars 290, and each sub-busbar 290 may include a busbar bridge 292, the positive electrode connection portion 294 and the negative electrode connection portion 296.

The busbar bridge 292 may have a strip shape with a predetermined length and width. The busbar bridge 292 may be inserted into the pair of busbar covers 280, and may have a predetermined length along the widthwise direction (Y axis direction) of the battery pack 2. The busbar bridges 292 may be arranged in a pattern corresponding to the arrangement structure of the battery cells 105 in the widthwise direction (Y axis direction) of the battery pack 2 to increase the efficiency of electrical connection between the busbar bridges 292 and the battery cells 105. Accordingly, in this embodiment, the busbar bridges 292 may be arranged in a zigzag pattern in the widthwise direction (Y axis direction) of the battery pack 2.

The busbar bridge 292 may include a conductive material. For example, the busbar bridge 292 may include a metal, for example, aluminum or copper. The busbar bridge 292 is not limited thereto, and may include any other material for the electrical connection.

The positive electrode connection portion 294 may be integrally extended and protruded from the busbar bridge 292, and may be positioned in the main hole 287 within the busbar hole 285. The positive electrode connection portion 294 may be electrically connected to the first electrode terminal 40 (see FIG. 14) which is the positive electrode of the battery cell 105. The electrical connection may be performed through a welding process for electrical connection such as laser welding or ultrasonic welding.

Since the connection between the positive electrode connection portion 294 and the positive electrode 40 of the battery cell 105 is performed in the open space of the main hole 287 of the busbar hole 285, when establishing the connection, the welding process for the connection may be performed in the open space immediately without any additional process.

The negative electrode connection portion 296 may integrally extended from the busbar bridge 292 and protruded in a direction opposite to the positive electrode connection portion 294, and may be positioned in the auxiliary hole 288 of the busbar hole 285. The negative electrode connection portion 296 may be electrically connected to the second electrode terminal 20a (see FIG. 14) which is the negative electrode of the battery cell 105. The electrical connection may be performed through a welding process for electrical connection such as laser welding or ultrasonic welding.

Since the connection between the negative electrode connection portion 296 and the negative electrode 20a of the battery cell 105 is performed in the open space of the auxiliary hole 288 of the busbar hole 285, when establishing the connection, the welding process for the connection may be performed in the open space immediately without any additional process.

The connectors 260, 270 are similar to the previous embodiment, and hereinafter, the overlapping description is omitted.

Hereinafter, the injection mechanism of the filling member 500 through the busbar hole 285 of the busbar cover 280 of the connection busbar 235 of the busbar assembly 205 of the present disclosure will be described in more detail.

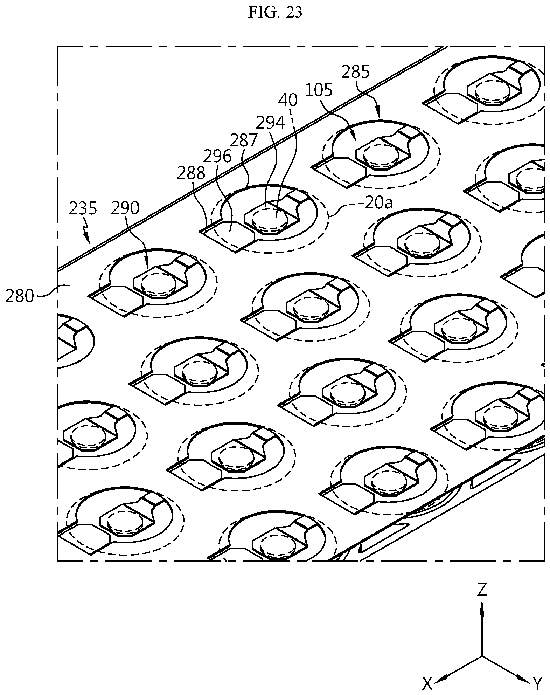

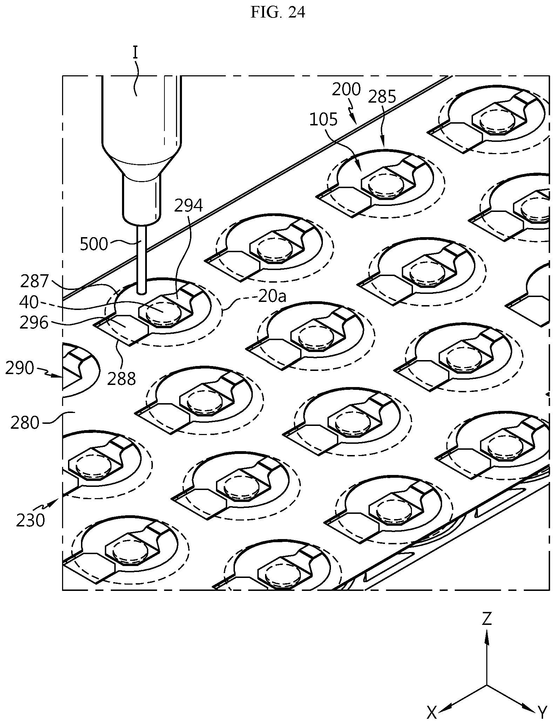

FIGS. 23 and 24 are diagrams illustrating the injection of the filling member through the busbar hole of the busbar cover of the connection busbar of FIG. 20.

Referring to FIG. 23, when mounting the connection busbar 235, the connection busbar 235 may be seated on the plurality of battery cells 105. In this instance, the upper surfaces of the battery cells 105 having the positive electrodes 40 and the negative electrode 20a of the battery cells 105 may be each positioned in each of the busbar holes 285 of the busbar cover 280 of the connection busbar 235. Additionally, the positive electrode connection portion 294 of the sub-busbar 290 and the negative electrode connection portion 296 of the sub-busbar 290 facing in the lengthwise direction (X axis direction) of the connection busbar 235 may be positioned in the busbar hole 285 of the busbar cover 280 of the connection busbar 235.

Accordingly, when performing the welding process for the electrical connection between the positive electrodes 40 of the battery cells 105 and the positive electrode connection portions 294 of the sub-busbars 290 and the electrical connection between the negative electrodes 20a of the battery cells 105 and the negative electrode connection portions 296 of the sub-busbars 290, the operator can perform the welding process above the busbar holes 285 in a more convenient and accurate manner.

Accordingly, in this embodiment, it is possible to significantly increase the efficiency of the welding process through the busbar holes 285 accommodating the positive electrodes 40 and the negative electrodes 20a of the battery cells 105 and the positive electrode connection portions 294 and the negative electrode connection portions 296 of the sub-busbars 290 above the connection busbar 235 (+Z axis direction).

Referring to FIG. 24, after the electrical connection of the busbar assembly 205, the operator may inject and apply the filling member 500 to the battery cells 105 through the resin injector I, on one side (+Z axis direction) of the busbar assembly 205, to be specific, the upper side (+Z axis direction) of the connection busbar 235. Here, the filling member 500 may be filled in the space between the battery cells 105 through the busbar holes 285, on one side (+Z axis direction) of the busbar assembly 205, i.e., the upper side (+Z axis direction) of the connection busbar 235.

In this embodiment, since the open space of the busbar holes 285 of the busbar cover 280 has a sufficient size to accommodate the positive electrodes 40 and the negative electrodes 20a of the battery cells 105 and the positive electrode connection portions 294 and the negative electrode connection portions 296 of the sub-busbars 290, it is possible to ensure a larger area for injecting and applying the filling member 500 as described below to the battery cells 105. Accordingly, in this embodiment, it is possible to significantly improve the injection and application efficiency of the filling member 500 through the busbar holes 285.

In this instance, the filling member 500 may be filled to completely cover the upper side (+Z axis direction) of the busbar assembly 200. The filling member 500 is not limited thereto, and may be filled to such an extent as to cover the busbar holes 285 of the connection busbar 235 of the busbar assembly 200.

Referring back to FIG. 14, the battery pack 2 may include the cooling unit 300, the S-structure unit 405 and the filling member 500.

The cooling unit 300 is substantially the same or similar to the previous embodiment, and hereinafter, the overlapping description is omitted.

The battery pack 2 may include a pair of S-structure units 405. The pair of S-structure units 405 may have an accommodation space in which the plurality of battery cells 105 is received. The plurality of battery cells 100 and the cooling units 300 may be positioned between the pair of S-structure units 405.

The filling member 500 may be filled in the space between the plurality of battery cells 105 to cover at least part of the busbar assembly 205. In the same way as the previous embodiment, the filling member 500 may include a silicone resin. In the same way as the previous embodiment, the filling member 500 may be filled to form the pack case structure of the battery pack 2.

Additionally, the filling member 500 may be filled to cover the battery cells 105 and the cooling unit 300 between the S-structure unit 405 with the outer surface of the S-structure unit 405 exposed therethrough.

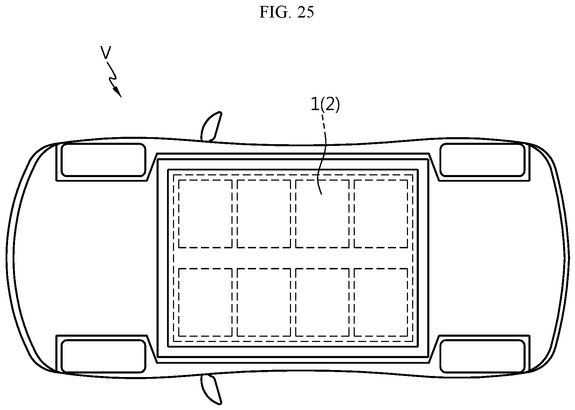

FIG. 25 is a diagram illustrating a vehicle according to an embodiment of the present disclosure.

Referring to FIG. 25, the vehicle V may be an electric vehicle or a hybrid electric vehicle, and may include at least one battery pack 1, 2 of the previous embodiment as an energy source.

In this embodiment, since the above-described battery pack 1, 2 has a compact structure with high energy density, it is easy to achieve a modularized structure of the plurality of battery packs 1,2 when mounting in the vehicle V, and it is possible to ensure a relatively high degree of freedom in mounting in various internal space shapes of the vehicle V.

According to the various embodiments as described above, it is possible to provide the busbar assembly for improving the energy density and strength, and the battery pack and the vehicle comprising the same.

Additionally, according to the various embodiments as described above, it is possible to provide the busbar assembly for improving the price competitiveness and manufacturing efficiency, and the battery pack and the vehicle comprising the same.

Furthermore, according to the various embodiments as described above, it is possible to provide the busbar assembly for improving the cooling performance, and the battery pack and the vehicle comprising the same.

While the exemplary embodiment of the present disclosure has been hereinabove illustrated and described, the present disclosure is not limited to the above-described specific embodiment and it is obvious to those skilled in the art that various modifications may be made thereto without departing from the claimed subject matter of the appended claims and such modifications should not be understood individually from the technical spirit or scope of the present disclosure.

## Claims

1. A battery pack, comprising:
a plurality of battery cells; and
a busbar assembly positioned on a side of the battery cells and configured to electrically connect the battery cells,
wherein the busbar assembly includes:
a sub-busbar for electrical connection to positive electrodes and negative electrodes of the battery cells; and
a busbar cover configured to cover the sub-busbar, and having a busbar hole to guide the electrical connection between the sub-busbar and the battery cells.

2. The battery pack according to claim 1, wherein comprises a filling member filled in a space between the plurality of battery cells to cover at least part of the busbar assembly.

3. The battery pack according to claim 2, wherein the filling member is filled in the space between the battery cells through the busbar hole, on a side of the busbar assembly.

4. The battery pack according to claim 2, wherein the connection between the sub-busbar and the positive electrodes of the battery cells and the connection between the sub-busbar and the negative electrodes of the battery cells is performed in an open space of the busbar hole.

5. The battery pack according to claim 4, wherein the sub-busbar includes:
a busbar bridge of a strip shape having a predetermined length and width;
a positive electrode connection portion integrally extended and protruded from the busbar bridge, and connected to the positive electrodes of the battery cells; and
a negative electrode connection portion integrally extended and protruded from the busbar bridge, and connected to the negative electrodes of the battery cells.

6. The battery pack according to claim 5, wherein the negative electrode connection portion is protruded in a direction opposite to the positive electrode connection portion.

7. The battery pack according to claim 5, wherein the busbar hole includes:
a main hole formed in the busbar cover, the main hole having an open space with a predetermined size in the busbar cover; and
an auxiliary hole extended from an end of the main hole, the auxiliary hole having an open space of a groove shape with a predetermined size.

8. The battery pack according to claim 7, wherein the positive electrode connection portion is positioned in the main hole, and the negative electrode connection portion is positioned in the auxiliary hole.

9. The battery pack according to claim 7, wherein a region inside a top edge having the positive electrode of the battery cell is positioned in the main hole.

10. The battery pack according to claim 7, wherein the open space of the main hole is larger in size than the positive electrode connection portion.

11. The battery pack according to claim 7, wherein the open space of the auxiliary hole is at least equal to or larger in size than the negative electrode connection portion.

12. The battery pack according to claim 1, wherein the busbar assembly includes a pair of the busbar covers, and
wherein the sub-busbar is inserted in between the pair of busbar covers.

13. The battery pack according to claim 1, wherein the sub-busbar is a single layer having a strip shape with a predetermined length and width.

14. A busbar assembly for electrical connection of battery cells of a battery pack, the busbar assembly comprising:
a sub-busbar for electrical connection to positive electrodes and negative electrodes of the battery cells; and
a busbar cover configured to cover the sub-busbar, and having a busbar hole to guide the electrical connection between the sub-busbar and the battery cells.

15. A vehicle comprising at least one battery pack according to claim 1.
